(19) Europäisches Patentamt
European Patent Office
Office européen des brevets

(11) **EP 3 973 256 B1**

(12) **FASCICULE DE BREVET EUROPEEN**

(45) Date de publication et mention
de la délivrance du brevet:
**24.01.2024 Bulletin 2024/04**

(21) Numéro de dépôt: **20725583.7**

(22) Date de dépôt: **19.05.2020**

(51) Classification Internationale des Brevets (IPC):
**G01H 9/00** *(2006.01)*     **G01D 5/353** *(2006.01)*
**G01L 1/24** *(2006.01)*     **G01L 1/25** *(2006.01)*
**G01V 1/22** *(2006.01)*     **G01V 1/38** *(2006.01)*

(52) Classification Coopérative des Brevets (CPC):
**G01L 1/242; G01D 5/35309; G01H 9/004;**
**G01L 1/255;** G01V 1/226; G01V 1/38

(86) Numéro de dépôt international:
**PCT/EP2020/063992**

(87) Numéro de publication internationale:
**WO 2020/234309 (26.11.2020 Gazette 2020/48)**

(54) **CAPTEUR ACOUSTIQUE À FIBRE OPTIQUE ET SYSTÈME DE MESURE, VÉHICULE ET PROCÉDÉ DE MESURE ASSOCIÉS**

FASEROPTISCHER AKUSTISCHER SENSOR UND ZUGEHÖRIGES MESSSYSTEM, FAHRZEUG UND MESSVERFAHREN

FIBRE-OPTIC ACOUSTIC SENSOR AND ASSOCIATED MEASUREMENT SYSTEM, VEHICLE AND MEASUREMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2019 FR 1905243**

(43) Date de publication de la demande:
**30.03.2022 Bulletin 2022/13**

(73) Titulaire: **HOASYS**
**06560 Valbonne (FR)**

(72) Inventeur: **BORTOLOZZO, Umberto**
**06160 Juan Les Pins (FR)**

(74) Mandataire: **Lavoix**
**2, place d'Estienne d'Orves**
**75441 Paris Cedex 09 (FR)**

(56) Documents cités:
**EP-A1- 0 326 476     US-A- 4 525 626**
**US-A- 4 854 706     US-A1- 2009 260 501**

- **BEARD P C ET AL: "Miniature optical fibre ultrasonic hydrophone using a Fabry-Perot polymer film interferometer", ELECTRONICS LETTERS, IEE STEVENAGE, GB, vol. 33, no. 9, 24 avril 1997 (1997-04-24) , pages 801-803, XP006007409, ISSN: 0013-5194, DOI: 10.1049/EL:19970545**
- **LAYTON M R ET AL: "Optical fiber acoustic sensor utilizing mode-mode interference", APPLIED OPTICS, OPTICAL SOCIETY OF AMERICA, WASHINGTON, DC; US, vol. 18, no. 5, 1 mars 1979 (1979-03-01), pages 666-670, XP001422319, ISSN: 0003-6935**
- **RASHLEIGH S C: "Acoustic sensing with a single coiled monomode fiber", OPTICS LETTERS, OPTICAL SOCIETY OF AMERICA, US, vol. 5, no. 9, 1 septembre 1980 (1980-09-01), pages 392-394, XP001422336, ISSN: 0146-9592**

## Description

La présente invention concerne un capteur acoustique. Elle se rapporte aussi à un système de mesure, un véhicule et un procédé de mesure correspondants.

La détection acoustique à haute sensibilité est intéressante pour de nombreuses applications comme la surveillance des côtes, la détection et/ou l'identification des sous-marins et bâtiments de surface, la biologie sous-marine, la surveillance de structure offshore ou des études sismiques et le contrôle des structures. Plus généralement, la détection acoustique sous-marine est utilisée dans des applications tant militaires que civiles.

Par exemple, le document US 2009/0260501 A1 propose un capteur à fibre optique multimode.

Du fait du développement de nouveaux systèmes autonomes, comme par exemple les drones aériens, les drones et les planeurs sous-marins, il est souhaitable que les systèmes permettant une détection acoustique en milieu sous-marin soient plus compacts et moins consommateurs en énergie tout en gardant une sensibilité élevée.

Pour un tel objectif, ont été développés de multiples systèmes de mesure acoustique à base de microphones ou de fibre optique.

Toutefois, chacun de ces systèmes de mesure à haute sensibilité présente une consommation énergétique élevée.

Il existe donc un besoin pour un capteur acoustique permettant une mesure d'un signal acoustique avec une faible consommation énergétique sans perte en précision dans la mesure.

Pour cela, la présente description porte sur un capteur acoustique comportant un composant présentant une entrée et une sortie, le composant étant adapté à conduire des ondes lumineuses selon une pluralité de modes de propagation entre l'entrée et la sortie, le composant convertissant un signal acoustique à mesurer en un déphasage proportionnel à une interférence intermodale entre au moins deux modes de propagation, le composant comprenant une fibre optique multimode positionnée entre deux réflecteurs pour former une cavité , et un détecteur d'une grandeur physique dépendant du déphasage d'un signal provenant du composant.

Suivant des modes de réalisation particuliers, le capteur comprend une ou plusieurs des caractéristiques suivantes, prise(s) isolément ou suivant toutes les combinaisons techniquement possibles :

- la distance entre l'entrée du composant et la sortie du composant est supérieure ou égale à 5 centimètres.
- la distance entre l'entrée du composant et la sortie du composant est supérieure ou égale à 200 mètres.
- le détecteur, notamment un photodétecteur, est propre à détecter au moins l'un de la fréquence et de l'amplitude d'un signal incident.

La présente description porte sur un système de mesure comprenant au moins un capteur acoustique tel que précédemment, le système de mesure comportant, en outre, une source lumineuse propre à générer un faisceau lumineux et agencé pour illuminer l'entrée du composant, la source lumineuse présentant de préférence une longueur de cohérence supérieure ou égale à 300 mètres.

Suivant des modes de réalisation particuliers, le système de mesure comprend une ou plusieurs des caractéristiques suivantes, prise(s) isolément ou suivant toutes les combinaisons techniquement possibles :

- le système de mesure comporte, en outre, des fibres agencées pour déporter la source lumineuse et le détecteur.
- le système de mesure comporte, en outre, un contrôleur adapté à déduire de la grandeur physique détectée des caractéristiques du signal acoustique.

La présente description porte aussi sur un système de mesure comportant au moins deux capteurs acoustiques tels que précédemment décrit, les composants des capteurs étant décalés deux à deux.

Suivant des modes de réalisation particuliers, le système de mesure comprend une ou plusieurs des caractéristiques suivantes, prise(s) isolément ou suivant toutes les combinaisons techniquement possibles :

- soit le système de mesure comporte un détecteur par capteur, soit le système de mesure comporte une unique source lumineuse modulée en amplitude et/ou fréquence et un unique détecteur, chaque capteur étant associé à une impulsion ou à une fréquence respective de la source lumineuse.
- le système de mesure comporte, en outre, un contrôleur adapté à déduire de la grandeur physique détectée des caractéristiques du signal acoustique.
- un réflecteur présente un coefficient de réflexion compris entre 0,2% et 20% à la longueur d'onde d'émission de la source lumineuse, de préférence entre 0,90% et 1,10%.
- le réflecteur présentant un coefficient de réflexion compris entre 0,2% et 20% à la longueur d'onde d'émission de la source lumineuse est positionné à l'entrée du composant, de préférence entre 0,90% et 1,10%.
- un réflecteur présente un coefficient de réflexion supérieur à 60% à la longueur d'onde d'émission de la source lumineuse, avantageusement supérieur à 90%, de préférence supérieur à 95% et préférentiellement supérieur à 99%.
- un réflecteur est une interface entre deux milieux, notamment une interface air-verre.

La présente description se rapporte également à un véhicule équipé d'un capteur ou d'un système de mesure tel que précédemment décrit.

La présente description porte également sur un procédé de mesure d'un signal acoustique, le procédé comportant la détection d'une grandeur physique par un détecteur faisant partie d'un capteur acoustique comportant ledit détecteur et un composant présentant une entrée et une sortie, le composant étant adapté à conduire des ondes lumineuses selon une pluralité de modes de propagation entre l'entrée et la sortie, le composant convertissant un signal acoustique à mesurer en un déphasage proportionnel à une interférence intermodale entre au moins deux modes de propagation, la grandeur physique dépendant du déphasage d'un signal provenant du composant, le composant comprenant une fibre optique multimode positionnée entre deux réflecteurs pour former une cavité.

D'autres caractéristiques et avantages de l'invention apparaîtront à la lecture de la description qui suit, de modes de réalisation de l'invention, donnée à titre d'exemple uniquement et en référence aux dessins qui sont :

- figure 1, une vue schématique d'un exemple de système de mesure acoustique ;
- figure 2, une vue agrandie d'une partie du système de mesure de la figure 1 ;
- figure 3, un graphe présentant l'évolution temporelle de la tension mesurée aux bornes d'un détecteur faisant partie du système de mesure de la figure 1 ;
- figure 4, un graphe présentant l'évolution temporelle de la tension mesurée aux bornes d'un détecteur faisant partie du système de mesure de la figure 1 ;
- figure 5, un graphe présentant l'évolution temporelle de la tension mesurée aux bornes d'un détecteur faisant partie du système de mesure de la figure 1 ;
- figure 6, un graphe présentant l'évolution de la tension mesurée aux bornes d'un détecteur faisant partie du système de mesure de la figure 1 en fonction de l'amplitude du signal acoustique à mesurer;
- figure 7, une vue schématique d'un autre exemple de système de mesure acoustique;
- figure 8, une vue schématique d'encore un autre exemple de système de mesure acoustique, et
- figure 9, un graphe présentant l'évolution temporelle de la tension mesurée aux bornes de deux détecteurs faisant chacun partie du système de mesure de la figure 7. Un système de mesure d'un signal acoustique 10 est représenté sur la figure 1.

Le système de mesure 10 est propre à mesurer les caractéristiques d'un signal acoustique à mesurer.

A titre d'exemple, les caractéristiques sont l'amplitude et la fréquence du signal acoustique.

Par extension, la présence du signal acoustique est considérée comme une caractéristique.

Le système de mesure 10 comprend une source lumineuse 12, une première fibre optique 14, un séparateur 16, un composant 18, une deuxième fibre optique 20, un détecteur 22 et un contrôleur 24.

La source lumineuse 12 est une source propre à émettre des ondes lumineuses en continu.

La source lumineuse 12 est un laser, par exemple une diode laser.

La source lumineuse 12 est, de préférence, une source lumineuse émettant à une longueur d'ondes comprises entre 0,5 micromètres ($\mu$m) et 1,7 $\mu$m.

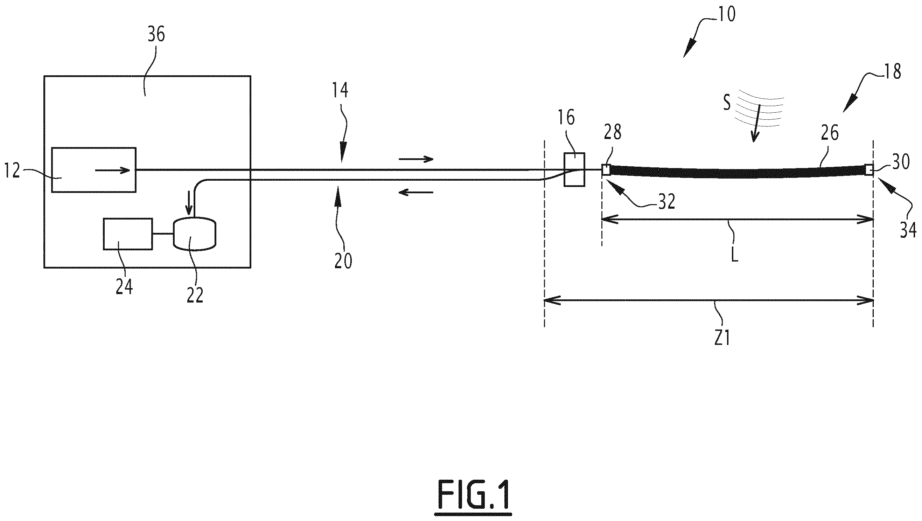

Dans le cas de la figure 1, la longueur d'onde d'émission de la source lumineuse 12 est égale à 1,55 $\mu$m.

La source lumineuse 12 présente une longueur de cohérence $L_C$.

La longueur de cohérence $L_C$ est supérieure à 30 mètres (m), de préférence supérieure ou égale à 500 m et préférentiellement supérieure ou égale à 1000 m.

Par définition, la longueur de cohérence $L_C$ correspond à la célérité de la lumière divisée par étalement spectral de la source lumineuse 12. Une mesure de celui-ci permet donc d'accéder à la longueur de cohérence $L_C$.

Dans l'exemple proposé, la longueur de cohérence $L_C$ est supérieure ou égale à 1000 m.

La première fibre optique 14 s'étend entre la source lumineuse 12 et le séparateur 16.

La première fibre optique 14 est une fibre de déport en ce sens où la première fibre optique 14 permet d'éloigner la source lumineuse 12 du composant 18.

Selon l'exemple de la figure 1, la première fibre optique 14 est une fibre monomode.

Le séparateur 16 sert à séparer le faisceau incident sur le composant 18 du faisceau de retour du composant 18.

Dans le cas décrit, le séparateur 16 est un circulateur optique.

Le composant 18 présent une entrée 18E et une sortie 18S.

Le composant 18 est adapté à conduire des ondes lumineuses selon une pluralité de modes de propagation entre l'entrée 18E et la sortie 18S.

Le composant 18 est propre à convertir un signal acoustique à mesurer en un déphasage proportionnel à une interférence intermodale entre au moins deux modes de propagation.

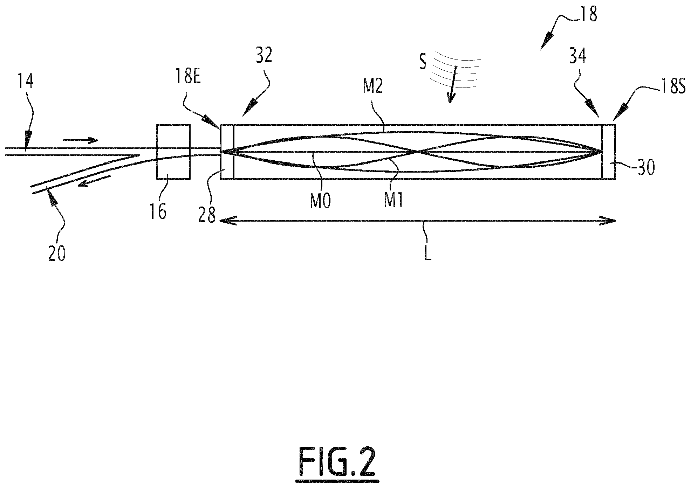

Comme visible à la figure 2, le composant 18 comporte une fibre optique multimode 26 et deux réflecteurs 28 et 30.

La fibre optique multimode 26 s'étend entre deux extrémités 32 et 34, une extrémité proximale 32 du côté de la source lumineuse 12 et une extrémité distale 34 du côté opposé.

Par définition, une fibre optique multimode est propre à conduire de la lumière incidente depuis l'extrémité proximale 32 vers l'extrémité distale 34 selon plusieurs chemins optiques différents. Chaque chemin optique correspond à un mode de propagation.

Dans l'exemple de la figure 2, trois chemins optiques sont représentés.

Le chemin optique le plus court (la ligne droite) est appelé mode fondamental M0 et le chemin optique le plus long correspond au mode M2 le plus élevé. Le chemin optique de taille intermédiaire entre les deux correspond au mode indiqué M1 sur la figure 2.

En l'espèce, la fibre optique multimode 26 est une fibre à gradient d'indice

En outre, la fibre optique multimode 26 présente un coeur présentant un diamètre supérieur ou égal à 50 µm. Dans le cas proposé, le diamètre du coeur est égal à 62,5 µm.

Par ailleurs, la fibre optique multimode 26 présente une ouverture numérique supérieure à 0,15.

Selon l'exemple proposé, l'ouverture numérique de la fibre optique multimode 26 est de 0,275.

La fibre optique multimode 26 présente une longueur notée L.

La longueur L de la fibre optique multimode 26 est supérieure ou égale à 5 centimètres (cm), de préférence supérieure ou égale à 10 m, avantageusement supérieure ou égale à 20 m.

Dans le présent exemple, la fibre optique multimode 26 présente une longueur L de 10 m.

Chaque réflecteur 28 et 30 est propre à réfléchir au moins en partie un faisceau incident.

Ainsi, un réflecteur 28 et 30 est un miroir au sens large de l'acceptation englobant notamment des interfaces entre deux milieux partiellement réfléchissantes.

Selon un mode de réalisation particulier, les réflecteurs 28 et 30 sont des miroirs au sens strict.

Les deux réflecteurs 28 et 30 sont positionnés respectivement à l'extrémité proximale 32 et à l'extrémité distale 34.

Le premier réflecteur 28 est partiellement réfléchissant.

Selon l'exemple proposé, le premier réflecteur 28 est formé par l'interface air-verre à l'extrémité proximale 32 de la fibre optique multimode 26.

Le premier réflecteur 28 présente un coefficient de réflexion de l'ordre de 1% à la longueur d'onde d'émission de la source lumineuse 12. Par l'expression « de l'ordre de », il est entendu entre 0,90% et 1,10%.

Par contraste, le deuxième réflecteur 30 présente un coefficient de réflexion relativement élevé, par exemple supérieur à 95%, avantageusement supérieur à 99%.

Le deuxième réflecteur 30 est, selon l'exemple proposé, un miroir au sens strict.

La deuxième fibre optique 20 s'étend entre le séparateur 16 et le détecteur 22.

La deuxième fibre optique 20 est une fibre de déport en ce sens où la deuxième fibre optique 20 permet d'éloigner le détecteur 22 du composant 18.

Selon l'exemple de la figure 1, la deuxième fibre optique 20 est une fibre monomode.

Selon l'exemple proposé, la première fibre optique 14 et la deuxième fibre optique 20 présentent la même longueur.

Cela permet de positionner le détecteur 22 et la source lumineuse 12 dans un même boîtier 36 pour diminuer l'encombrement du système de mesure 10.

Dans le cas proposé, la première fibre optique 14 et la deuxième fibre optique 20 présente une longueur supérieure à 250 m, en l'occurrence égale à 500 m.

Le détecteur 22 est propre à détecter une grandeur physique dépendant du déphasage.

Dans l'exemple proposé, le détecteur 22 détecte l'amplitude d'un signal lumineux incident, le signal lumineux incident provenant du composant 18.

Dans le cas particulier de la figure 1, le détecteur 22 est un photodétecteur, plus précisément une photodiode.

L'ensemble du composant 18 et du détecteur 22 forme un capteur acoustique.

Le contrôleur 24 est adapté à déduire de la grandeur physique détectée au moins une caractéristique du signal acoustique à mesurer.

Par exemple, le contrôleur 24 est propre à obtenir l'amplitude, la fréquence et la phase du signal acoustique à partir de l'amplitude mesurée par le détecteur 22.

Le fonctionnement du système de mesure 10 de la figure 1 est maintenant décrit en référence à un procédé de mesure d'un signal acoustique.

Lors du procédé de mesure, la lumière émise par la source lumineuse 12 est injectée dans la première fibre optique 14.

La lumière se propage à travers la première fibre optique 14 jusqu'au séparateur 16. Le séparateur 16 laisse passer la lumière pour illuminer le composant 18.

Dans le composant 18, la cavité formée par la fibre multimode 26 et entre les deux réflecteurs 28 et 30 agit comme un interféromètre, l'interférence se produisant entre les modes qui se propagent dans la fibre multimode 26.

Plus précisément, en présence d'une perturbation acoustique de pulsation ω, la longueur de la fibre optique multimode 26 devient :

$$L + \Delta\varepsilon \cdot L \cdot \sin(\omega t)$$

où $\Delta\varepsilon$ est l'étirement de la fibre à la pulsation ω.

Il est possible de montrer alors que le déphasage intermodal entre le mode fondamental et le mode d'ordre plus élevé s'écrit :

$$\Delta\varphi = \frac{2\pi}{\lambda} \alpha N L \Delta\epsilon$$

où :

- $\lambda$ est la longueur d'onde de la source lumineuse 12,
- $\alpha$ est un coefficient dépendant de l'ouverture numérique de la fibre optique multimode 26 , des indices de réfraction dans les différentes zone de la fibre optique multimode 26 et du type de fibre optique multimode 26 utilisée,

- N est nombre des aller-retours de la lumière dans la cavité. N dépend des coefficients de réflexion des deux réflecteurs 26 et 28 et de la longueur de cohérence $L_C$ de la source lumineuse 12.

Il apparaît ainsi que le composant 18 amplifie la sensibilité aux perturbations acoustiques grâce aux allers-retours dans la fibre optique multimode 18. La perturbation acoustique se traduit dans un déphasage intermodal à cause de la dispersion modale dans la fibre optique multimode 18. L'interférence intermodale va produire une modulation d'intensité optique en sortie du composant 18 à travers le premier réflecteur 28.

Le signal optique en sortie de l'interféromètre est renvoyé à travers le séparateur 16.

Le séparateur 16, du fait de son agencement, envoie le signal optique vers la deuxième fibre optique 20.

La deuxième fibre optique 20 conduit le signal optique jusqu'au détecteur 22.

Le détecteur 22 mesure l'intensité du signal optique, intensité qui dépend du déphasage intermodal dans la fibre optique multimode 26.

A partir de l'intensité mesurée, le contrôleur 24 détermine une propriété du signal acoustique à mesurer.

Par exemple, le contrôleur 24 utilise une loi de conversion entre l'intensité mesuré et l'amplitude du signal acoustique à mesurer.

Selon un exemple très simple, la loi de conversion est une loi affine.

Le procédé de mesure permet donc de déterminer au moins une caractéristique d'un signal acoustique à mesurer.

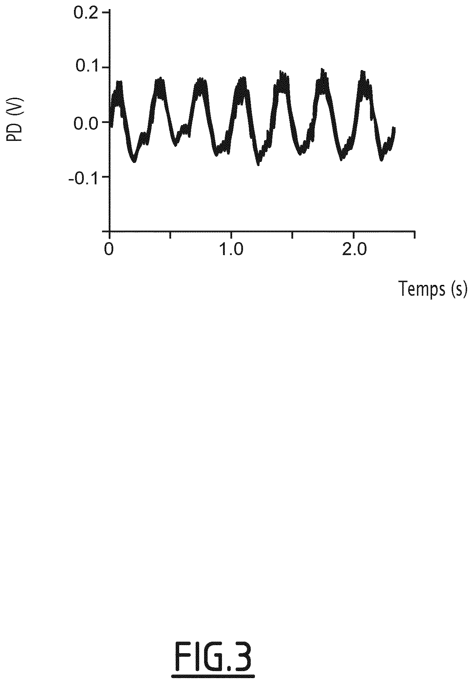

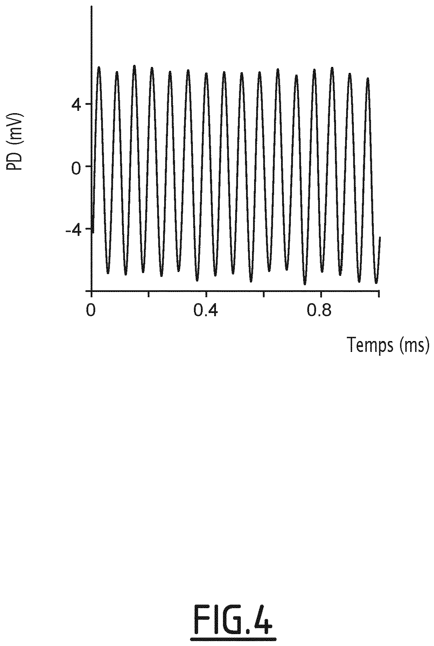

La capacité du système de mesure 10 de la figure 1 à déterminer avec précision des caractéristiques d'un signal acoustique à mesurer a été démontrée expérimentalement en référence aux figures 3 à 6.

Chacune des figures 3 à 5 est une représentation graphique de l'évolution de la tension aux bornes du détecteur 22 au cours du temps pour trois excitations acoustiques respectives.

Dans l'expérience proposée, l'excitation acoustique est générée par un émetteur piézoélectrique.

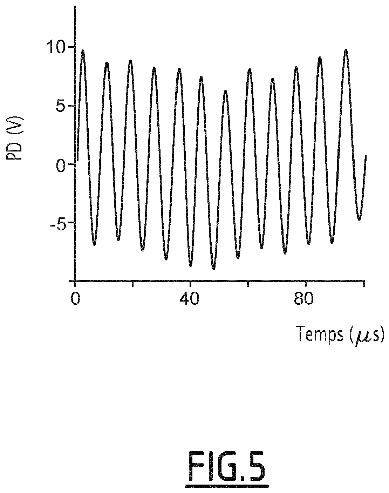

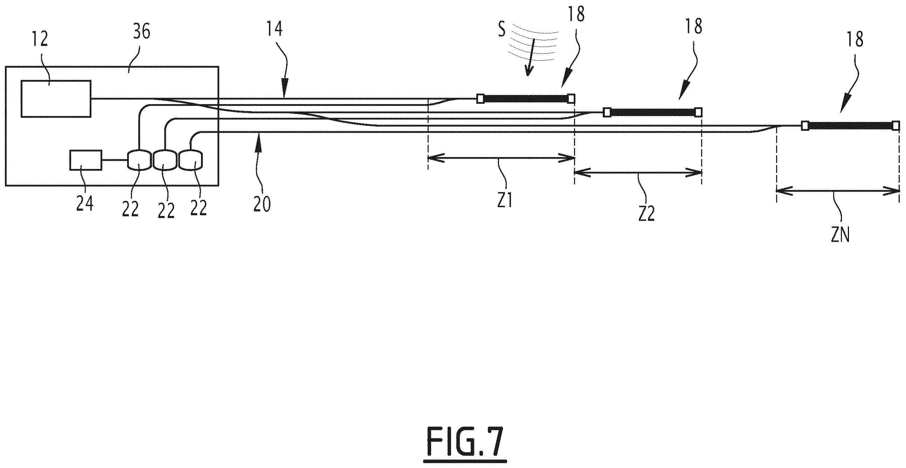

La première excitation ayant conduit à l'obtention du signal visible sur la figure 3 est une excitation sinusoïdale à une fréquence de 3 Hertz (Hz), la deuxième excitation ayant conduit à l'obtention du signal visible sur la figure 7 est une excitation sinusoïdale à une fréquence de 15 kiloHertz (kHz) et la troisième excitation ayant conduit à l'obtention du signal visible sur la figure 5 est une excitation sinusoïdale à une fréquence de 120 kHz.

L'analyse des figures 3 à 5 montre bien que le détecteur 22 détecte un signal optique de nature sinusoïdale présentant une fréquence sensiblement égale à la fréquence de l'excitation acoustique.

Dans le cas de la deuxième excitation, il a également été testé la réponse en amplitude du système de mesure 10.

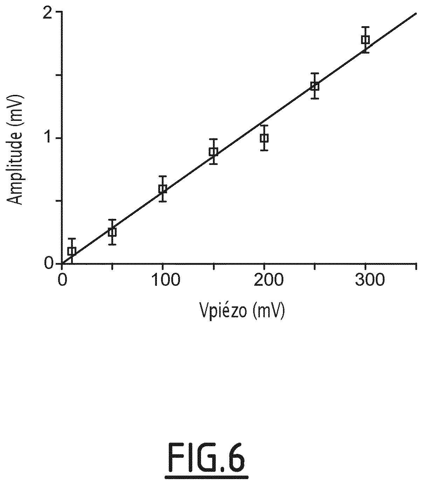

La figure 6 montre ainsi la réponse en tension du détecteur 22 pour une excitation variable. Plus précisément, la figure 6 montre l'amplitude du signal mesurée en fonction de l'amplitude de la tension appliquée à l'émetteur piézoélectrique.

Le fait que la courbe obtenue sur la figure 6 est linéaire montre bien que la sensibilité du système de mesure 10 est bonne, ce qui résulte en une mesure de bonne qualité.

Le présent système de mesure 10 présente donc une sensibilité augmentée grâce à l'effet d'interférence intermodale dans la fibre optique multimode 26 agissant comme un transducteur dans une cavité optique.

Par ailleurs, il est à noter que la formule précédente donnant le déphasage intermodal montre que la sensibilité du système de mesure 10 va augmenter linéairement avec la longueur L de la fibre optique multimode 26 et avec la longueur de cohérence $L_C$ de la source lumineuse 12.

Il est donc aisé de rendre le système de mesure 10 plus sensible si besoin sans modifier l'intégralité du système de mesure 10.

En outre, le système de mesure 10 présente une large bande passante de fréquences acoustiques détectables. En effet la bande passante du système de mesure 10 est égale à la largeur de la bande passante du photodétecteur.

De plus, le système de mesure 10 présente une basse consommation énergétique. En effet, les seuls composants actifs sont la source lumineuse 12 et le détecteur 22.

Dans l'exemple expérimental, l'énergie consommée par le système de mesure 10 est inférieure à 1 W.

Le système de mesure 10 permet ainsi une mesure d'un signal acoustique avec une faible consommation énergétique sans perte en précision dans la mesure.

Un tel système de mesure 10 peut faire partie d'ensemble plus grand tels des antennes acoustiques ou des hydrophones.

Du fait de sa compacité et sa faible consommation en énergie, le système de mesure 10 est particulièrement adapté pour des applications embarquées, notamment pour équiper un véhicule terrestre ou sous-marin.

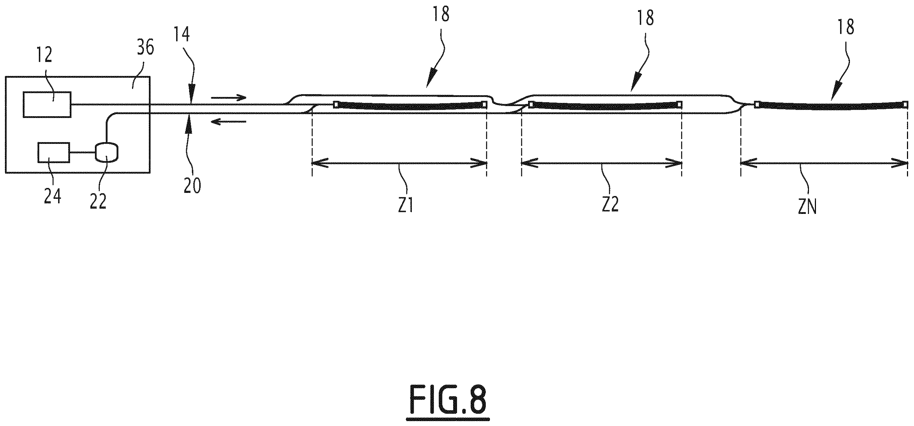

D'autres modes de réalisations sont envisageables pour le système de mesure 10. Deux propositions sont illustrées par les figures 7 et 8.

Pour la description qui va suivre, les éléments identiques entre le mode de réalisation de la figure 1 et les modes de réalisation des figures 7 et 8 ne sont pas décrits à nouveau pour ne pas alourdir la description. Seules les différences avec le système de mesure 10 de la figure 1 sont plus spécifiquement décrites.

Dans chacun des cas, le système de mesure

10 comportant au moins deux capteurs acoustiques 12.

Le nombre de composants 18 est noté N.

N est un nombre entier, supérieur ou égal à 3 dans le cas de la figure 7 ou 8, de préférence supérieur ou égal à 10, avantageusement supérieur ou égal à 20.

Les composants 18 des capteurs 12 sont décalés deux à deux.

Plus précisément, les composants 18 sont décalés le long de la direction de propagation du faisceau lumineux émis par la source lumineuse 12.

Dans l'exemple proposé, il n'y a aucun recouvrement entre les composants 18.

Par recouvrement dans ce contexte, il convient de comprendre que la projection de chaque composant 18 sur un axe parallèle à la direction de propagation du faisceau lumineux ne présente aucune intersection avec une autre projection d'un autre composant 18.

Toutefois, dans le cas de la figure 7, les composants 18 sont également décalés selon une direction perpendiculaire à la direction de propagation du faisceau lumineux alors que, dans le cas de la figure 8, les composants 18 sont alignés.

Chaque composant 18 est ainsi associé à une zone de détection de signaux acoustique qui lui est propre.

Le premier composant 18 (celui qui est le plus proche de la source lumineuse 12) est associé à une première zone spatiale Z1, le deuxième composant 18 est associé à une deuxième zone spatiale Z2 voisine de la première zone spatiale Z1 et ainsi de suite jusqu'au N-ième composant 18 (celui qui est le plus proche de la source lumineuse 12) qui est associé à la N-ième zone spatiale ZN.

Les systèmes de mesure 10 des figures 7 et 8 varient uniquement sur l'interrogation effectuée des fibres optiques multimodes 26.

De manière imagée, il pourrait être considérée que le système de mesure 10 de la figure 7 correspond à un multiplexage spatial alors que le système de mesure 10 correspond à un multiplexage temporel.

Plus précisément, dans le cas de la figure 7, le système de mesure 10 comporte un détecteur 22 par capteur.

Pour conserver l'unicité de la source lumineuse 12, il est également utilisé un coupleur 1*N permettant de diviser le signal optique émis par la source lumineuse 12 en N signaux incidents qui sont injectés ensuite dans chaque composant 18.

Par contraste, pour le cas de la figure 8, le système de mesure 10 comprend une unique source lumineuse 12 modulée en amplitude et/ou fréquence et un unique détecteur 22, chaque capteur étant associé à une impulsion séparée temporellement et/ou à une fréquence respective de la source lumineuse 12.

Dans le cas de la figure 8, la durée de l'impulsion laser est inférieure ou égale à 2L/c, c désignant la célérité de la lumière dans la fibre optique multimode 26.

Dans l'exemple décrit, les N composants 18 sont connectés séquentiellement à travers une porte 1x2 fibrée. Les signaux rétroréfléchis par chaque composant 18 sont renvoyés à travers une porte fibrée vers la fibre de déport connectée au détecteur 22.

Sur le détecteur 22, le signal détecté est composé de N impulsions temporellement séparées. Les amplitudes de chacune des impulsions sont modulées en fonction du signal acoustique à mesurer.

Le fait que les configurations précitées permettent de distinguer la position spatiale d'une perturbation acoustique a été démontré expérimentalement dans le cas du système de mesure 10 de la figure 7.

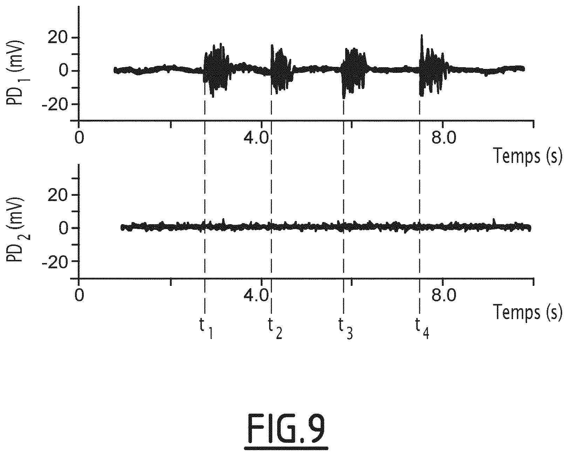

Cette démonstration expérimentale correspond au cas de la figure 9 dans laquelle il est montré l'évolution temporelle du signal optique détecté par le premier détecteur 22 associé au premier composant 18 et celle du signal optique détecté par le deuxième détecteur 22 associé au deuxième composant 18.

Cette distinction entre les zones spatiales de détection apparaît bien à la figure 8 dans laquelle il est montré que pour une excitation acoustique dans la première zone spatiale Z1, c'est bien uniquement le premier détecteur 22 qui réagit, le deuxième détecteur 22 ne réagissant pas. En effet, seul le premier détecteur 22 détecte une variation du signal lumineux.

Cela montre que les systèmes de mesure 10 des figures 7 et 8 permettent, en plus, de déterminer la provenance spatiale d'un signal acoustique.

Le système de mesure 10 des figures 7 et 8 est donc également un capteur acoustique permettant une mesure d'un signal acoustique avec une faible consommation énergétique sans perte en précision dans la mesure.

D'autres modes de réalisation sont aussi envisageables.

En particulier, pour augmenter encore le rapport signal à bruit, le détecteur 22 est pourvu d'une détection synchrone. Dans un tel cas, la source lumineuse 12 est modulée en amplitude avec une fréquence de référence.

Les modes de réalisation décrits précédemment peuvent être combinés pour former d'autres modes de réalisation lorsque cela est techniquement possible.

## Revendications

1. Capteur acoustique comportant :

   - un composant (18) présentant une entrée et une sortie, le composant (18) étant adapté à conduire des ondes lumineuses selon une pluralité de modes de propagation entre l'entrée et la sortie, le composant (18) étant également adapté à convertir un signal acoustique à mesurer en un déphasage proportionnel à une interférence intermodale entre au moins deux modes de propagation, et

- un détecteur (22) est propre à détecter une grandeur physique dépendant du déphasage d'un signal provenant du composant (18);

le capteur acoustique étant **caractérisé en ce que** le composant (18) comprend une fibre optique multimode (26) positionnée entre deux réflecteurs (28, 30) pour former une cavité.

2. Capteur selon la revendication 1, dans lequel la distance entre l'entrée du composant (18) et la sortie du composant (18) est supérieure ou égale à 5 centimètres, de préférence supérieure ou égale à 200 mètres.

3. Capteur selon la revendications 1 ou 2, dans lequel le détecteur (22), notamment un photodétecteur, est propre à détecter au moins l'un de la fréquence et de l'amplitude d'un signal incident.

4. Système de mesure d'un signal acoustique (10), le système de mesure (10) comprenant au moins un capteur acoustique selon l'une quelconque des revendications 1 à 3, le système de mesure (10) comportant, en outre, une source lumineuse (12) propre à générer un faisceau lumineux et agencé pour illuminer l'entrée du composant (18), la source lumineuse (12) présentant de préférence une longueur de cohérence supérieure ou égale à 300 mètres.

5. Système de mesure selon la revendication 4, dans lequel le système de mesure (10) comporte, en outre, des fibres (14, 20) agencées pour déporter la source lumineuse (12) et le détecteur (22).

6. Système de mesure d'un signal acoustique (10), le système de mesure (10) comportant au moins deux capteurs acoustiques selon l'une quelconque des revendications 1 à 3, les composants (18) des capteurs étant décalés deux à deux.

7. Système de mesure selon la revendication 6, dans lequel soit le système de mesure (10) comporte un détecteur (22) par capteur, soit le système de mesure comporte une unique source lumineuse (12) modulée en amplitude et/ou fréquence et un unique détecteur (22), chaque capteur étant associé à une impulsion ou à une fréquence respective de la source lumineuse (12).

8. Système de mesure selon l'une quelconque des revendications 4 à 7, dans lequel le système de mesure (10) comporte, en outre, un contrôleur (24) adapté à déduire de la grandeur physique détectée des caractéristiques du signal acoustique.

9. Système de mesure selon l'une quelconque des revendications 4 à 8 comprenant une source lumineuse (12), dans lequel un réflecteur (28,30) présente un coefficient de réflexion compris entre 0,90% et 1,10% à la longueur d'onde d'émission de la source lumineuse (12).

10. Système de mesure selon la revendication 9, dans lequel le réflecteur (28,30) présentant un coefficient de réflexion compris entre 0,90% et 1,10% à la longueur d'onde d'émission de la source lumineuse (12) est positionné à l'entrée du composant (18).

11. Système de mesure selon la revendication 9 ou 10, dans lequel un réflecteur (28, 30) présente un coefficient de réflexion supérieur à 95% à la longueur d'onde d'émission de la source lumineuse (12), de préférence supérieur à 99%.

12. Système de mesure selon l'une quelconque des revendications 9 à 11, dans lequel un réflecteur (28,30) est une interface entre deux milieux, notamment une interface air-verre.

13. Véhicule équipé d'un capteur selon l'une quelconque des revendications 1 à 3 ou d'un système de mesure (10) selon l'une quelconque des revendications 4 à 12.

14. Procédé de mesure d'un signal acoustique, le procédé comportant :

- la détection d'une grandeur physique par un détecteur (22) faisant partie d'un capteur acoustique comportant ledit détecteur (22) et un composant (18) présentant une entrée et une sortie, le composant (18) étant adapté à conduire des ondes lumineuses selon une pluralité de modes de propagation entre l'entrée et la sortie, le composant (18) étant également adapté à convertir un signal acoustique à mesurer en un déphasage proportionnel à une interférence intermodale entre au moins deux modes de propagation, la grandeur physique dépendant du déphasage d'un signal provenant du composant (18), le procédé étant **caractérisé en ce que** le composant (18) du capteur acoustique comprend une fibre optique multimode (26) positionnée entre deux réflecteurs (28, 30) pour former une cavité.

**Patentansprüche**

1. Akustischer Sensor mit:

- einer Komponente (18) mit einem Eingang und einem Ausgang, wobei die Komponente (18) dazu geeignet ist, Lichtwellen in mehreren Ausbreitungsmodi zwischen dem Eingang und dem Ausgang zu leiten, wobei die Komponente (18) auch dazu geeignet ist, ein zu messendes akustisches Signal in eine Phasenverschiebung umzuwandeln, die proportional zu einer intermodalen Interferenz zwischen mindestens zwei Ausbreitungsmodi ist, und

- ein Detektor (22) geeignet ist, eine physikalische Größe zu erfassen, die von der Phasenverschiebung eines Signals von der Komponente (18) abhängt;

wobei der akustische Sensor **dadurch gekennzeichnet ist, dass** die Komponente (18) eine Multimode-Lichtleitfaser (26) umfasst, die zwischen zwei Reflektoren (28, 30) positioniert ist, um einen Hohlraum zu bilden.

2. Sensor nach Anspruch 1, wobei der Abstand zwischen dem Eingang der Komponente (18) und dem Ausgang der Komponente (18) größer oder gleich 5 Zentimeter, vorzugsweise größer oder gleich 200 Meter, ist.

3. Sensor nach Anspruch 1 oder 2, wobei der Detektor (22), insbesondere ein Fotodetektor, geeignet ist, mindestens entweder die Frequenz oder die Amplitude eines ankommenden Signals zu erfassen.

4. System (10) zum Messen eines akustischen Signals, wobei das Messsystem (10) mindestens einen akustischen Sensor nach einem der Ansprüche 1 bis 3 umfasst, wobei das Messsystem (10) ferner eine Lichtquelle (12) umfasst, die geeignet ist, um einen Lichtstrahl zu erzeugen und so angeordnet ist, dass er den Eingang des Bauteils (18) beleuchtet, wobei die Lichtquelle (12) vorzugsweise eine Kohärenzlänge von 300 m oder mehr aufweist.

5. Messsystem nach Anspruch 4, wobei das Messsystem (10) zusätzlich Fasern (14, 20) umfasst, die so angeordnet sind, dass sie die Lichtquelle (12) und den Detektor (22) versetzen.

6. System zum Messen eines akustischen Signals (10), wobei das Messsystem (10) mindestens zwei akustische Sensoren nach einem der Ansprüche 1 bis 3 umfasst, wobei die Komponenten (18) der Sensoren paarweise versetzt sind.

7. Messsystem nach Anspruch 6, wobei entweder das Messsystem (10) einen Detektor (22) pro Sensor aufweist, oder das Messsystem eine einzelne Lichtquelle (12) aufweist, die amplituden- und/oder frequenzmoduliert ist und einen einzigen Detektor (22), wobei jeder Sensor mit einem entsprechenden Impuls oder einer entsprechenden Frequenz der Lichtquelle (12) verbunden ist.

8. Messsystem nach einem der Ansprüche 4 bis 7, wobei das Messsystem (10) außerdem einen Controller (24) umfasst, der dazu geeignet ist, aus der erfassten physikalischen Größe Eigenschaften des akustischen Signals abzuleiten.

9. Messsystem nach einem der Ansprüche 4 bis 8 mit einer Lichtquelle (12), wobei ein Reflektor (28, 30) einen Reflexionsgrad zwischen 0,90% und 1,10% bei der Emissionswellenlänge der Lichtquelle (12) aufweist.

10. Messsystem nach Anspruch 9, wobei der Reflektor (28, 30) mit einem Reflexionskoeffizienten zwischen 0,90% und 1,10% bei der Emissionswellenlänge der Lichtquelle (12) am Eingang des Bauteils (18) positioniert ist.

11. Messsystem nach Anspruch 9 oder 10, wobei ein Reflektor (28, 30) bei der Emissionswellenlänge der Lichtquelle (12) einen Reflexionsgrad von mehr als 95%, vorzugsweise mehr als 99%, aufweist.

12. Messsystem nach einem der Ansprüche 9 bis 11, bei dem ein Reflektor (28, 30) eine Grenzfläche zwischen zwei Medien ist, insbesondere eine Luft-Glas-Grenzfläche.

13. Mit einem Sensor nach einem der Ansprüche 1 bis 3 oder mit einem Messsystem nach einem der Ansprüche 4 bis 12 ausgestattetes Fahrzeug.

14. Verfahren zum Messen eines akustischen Signals, wobei das Verfahren umfasst:

- Erfassen einer physikalischen Größe durch einen Detektor (22), der Teil eines akustischen Sensors ist, der den Detektor (22) und eine Komponente (18) mit einem Eingang und einem Ausgang umfasst, wobei die Komponente (18) so beschaffen ist, dass sie Lichtwellen gemäß einer Vielzahl von Ausbreitungsmodi zwischen dem Eingang und dem Ausgang leitet, wobei die Komponente (18) auch so beschaffen ist, dass sie ein zu messendes akustisches Signal in eine Phasenverschiebung proportional zu einer intermodalen Interferenz zwischen mindestens zwei Ausbreitungsmodi umwandeln kann, wobei die physikalische Größe von der Phasenverschiebung eines Signals von der Komponente (18) abhängt, wobei das Verfahren **dadurch gekennzeichnet ist, dass** die Komponente (18) des akustischen Sensors eine Multimode-Lichtleitfaser (26) umfasst, die zwischen zwei Reflektoren (28, 30) positioniert ist, um einen Hohlraum zu bilden.

**Claims**

1. An acoustic sensor comprising:

   - a component (18) having an input and an output, the component (18) being able to conduct light waves in a plurality of propagation modes between the input and the output, the component (18) being further adapted to convert an acoustic signal to be measured into a phase shift proportional to an intermodal interference between at least two propagation modes, and
   - a detector (22) of a physical quantity dependent on the phase shift of the signal coming from the component (18),

   the acoustic sensor being **characterized in that** the component (18) comprises a multimode optical fiber (26), positioned between two reflectors (28, 30), to form a cavity.

2. The sensor according to claim 1, wherein the distance between the input of the component (18) and the output of the component (18) is greater than or equal to 5 centimeters, preferably greater than or equal to 200 meters.

3. The sensor according to claim 1 or 2, wherein the detector (22), in particular a photodetector, is suitable for detecting at least one of the frequency and the amplitude of an incident signal.

4. A system for measuring an acoustic signal (10), the measurement system (10) comprising at least one acoustic sensor according to any one of claims 1 to 4, the measurement system (10) further comprising a light source (12) suitable for generating a light beam and arranged to illuminate the input of the component (18), the light source (12) preferably having a coherence length of greater than or equal to 300 meters.

5. A measurement system according to claim 4, wherein the measurement system (10) further comprises fibers (14, 20) arranged to offset the light source (12) and the detector (22).

6. A system for measuring an acoustic signal (10), the measurement system (10) comprising at least two acoustic sensors according to any one of claims 1 to 3, the components (18) of the sensors being offset in pairs.

7. The measurement system according to claim 6, wherein either the measurement system (10) comprises one detector (22) per sensor or the measurement system comprises a single amplitude and/or frequency modulated light source (12) and a single detector (22), each sensor being associated with a respective pulse or frequency of the light source (12).

8. The measurement system according to any one of claims 4 to 7, wherein the measurement system (10) further comprises a controller (24) able to derive acoustic signal characteristics from the physical quantity detected.

9. The measurement system according to any one of claims 4 to 8 comprising at least one acoustic sensor according to claim 2 and a light source (12), wherein a reflector (28,30) has a reflection coefficient of between 0.90% and 1.10% at the emission wavelength of the light source (12).

10. The measurement system of claim 9, wherein the reflector (28,30) having a reflection coefficient of between 0.90% and 1.10% at the emission wavelength of the light source (12) is positioned at the input of the component (18).

11. The measurement system of claim 9 or 10, wherein a reflector (28, 30) has a reflection coefficient of greater than 95% at the emission wavelength of the light source (12), preferably greater than 99%.

12. The measurement system according to any one of claims 9 to 11, wherein a reflector (28, 30) is an interface between two media, in particular an air-glass interface.

13. A vehicle equipped with a sensor according to any one of claims 1 to 3 or with a measurement system (10) according to any one of claims 4 to 12.

14. A method for measuring an acoustic signal, the method comprising:

   - detection of a physical quantity by a detector (22) forming part of an acoustic sensor comprising said detector (22) and a component (18) having an input and an output, the component (18) being able to conduct light waves according to a plurality of propagation modes between the input and the output, the component (18) converting an acoustic signal to be measured into a phase shift proportional to an intermodal interference between at least two propagation modes, the physical quantity depending on the phase shift of the signal coming from the component (18),

   the method being **characterized in that** the component (18) of the acoustic sensor comprises a multimode optical fiber (26), positioned between two reflectors (28, 30), to form a cavity.

**FIG.1**

## FIG.2

**FIG.3**

FIG.4

## FIG.5

FIG.6

FIG.7

FIG.8

## FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090260501 A1